# EUROPEAN PATENT SPECIFICATION

(11) **EP 1 362 471 B1**
(45) Date of publication and mention of the grant of the patent: **15.09.2010**
(21) Application number: 02712150.8
(22) Date of filing: 15.02.2002
(51) Int. Cl.: H04M 3/42, H04W 8/26

(54) **METHOD AND APPARATUS FOR ANONYMOUS CALL SET UP**
VERFAHREN UND VORRICHTUNG ZUM ANONYMEN VERBINDUNGSAUFBAU
PROCEDE ET APPAREIL PERMETTANT D'EFFECTUER UN APPEL ANONYME

(30) Priority: 16.02.2001 FR 0102124
(43) Date of publication of application: 19.11.2003
(73) Proprietor: Gemalto SA, 92190 Meudon (FR)
(72) Inventor: AKLI, Florence, F-78340 Les Clayes sous Bois (FR); CUDONNEC, Christian, F-91530 St Maurice Montcouronne (FR); DOGUET, Muriel, F-94240 L'hay les Roses (FR); NACHEF, Armand, F-78180 Montigny le Bretonneux (FR)
(74) Representative: Cour, Pierre
(86) International application number: PCT/IB2002/000479
(87) International publication number: WO 2002/067559

(56) References cited:
- WO-A-99/63767
- US-A- 5 818 836
- US-A- 5 907 677
- "GSM TECHNICAL SPECIFICATION, (GSM 11.14 version 5.4.0)" GSM TECHNICAL SPECIFICATION, 11.14 , 1 July 1997 (1997-07-01), pages 1-5,7,9, XP002064640

## Description

This invention concerns communication between two entities or two persons wishing to set up a double anonymity call, for example in the case of a discussion or meeting group.

The initial application for the invention is for voice mode mobile telephony, but it can also be used in other domains, in particular in the data mode, such as networks including Internet, multimedia, including pay-TV in particular, and audio conferencing or video conferencing.

In particular in the case of mobile telephony, we are familiar with the communication devices comprising a mobile phone terminal ME of the **GSM (Global System for Mobile Communications)** network, associated with an **SIM (Subscriber Identity Module**) microprocessor card, the system having a permanent means of identification, this being the telephone number (or call number) of the terminal incorporating its card (subscriber terminal). Generally, **SIM** microprocessor cards serving to identify a subscriber are in widespread use at the present time, in particular for mobile telephony, in pay-TV decoders and access control systems.

A problem in terms of communication anonymity encountered with normal type **GSM** mobile phones lies in the fact **i)** that the number of caller A is displayed on the screen of called party B when the call is set up, and **ii)** that the mobile phone of A stores the telephone numbers for the most recent calls. This means that parties A and B know the telephone number of the other party.

Generally, calls between two persons A and B in the "double-blind" mode are obtained by manual or automatic intervention of a third party service. At the request of A, the third party intermediary calls B, and if B replies, connects A with B. The invention is designed to eliminate the third party service for reasons of convenience and security, as the third party service is in a position to keep a record of the call and/or the communicating parties, in certain cases unknown to the latter.

The document US5818836 discloses a system including an anonymous telephone communication through a circuit switched network (CSN). In operation, two parties place separate telephone calls to the anonymous voice system through the CSN. The parties then enter matchcodes. The anonymous voice system compares the matchcodes entered by the parties and connects the telephone calls if the matchcodes match.

The invention proposes a procedure for direct and anonymous connection between two entities, and in particular between two persons.

For this purpose, the invention proposes a procedure for setting up an anonymous call between two entities, calling party A and called party B, each entity having communication devices MC_A and MC_B, with permanent identification IMC_A and IMC_B for communication between the two, the procedure being characterised:
i) in that communication devices MC_A and MC_B are managed by microprocessor call management devices MGC_A and MGC_B adapted for direct communication between the parties,
ii) in that call management devices MGC_A and MGC_B each incorporate a call control application ACC, personalised for each entity ACC_A and ACC_B, in particular using nickname identifiers P_A and P_B and at least characterisers CARi_A and CARi_B,
iii) in that at least one memory associated with communication device MGC_A of entity A contains a list of potential called parties with identifier P_Bp for each called party and their characteriser(s) CARi_Bp, and identification IMC_Bp corresponding to the communication device associated with entity Bp which is not accessible to users, and
iv) in that the procedure uses a protocol involving the following operations:
   - selection by entity A, in list of identifiers P_Bp, of an identifier P_B from characterisers CARi_B of entity B,
   - on confirmation by entity A, transmission by call control application ACC_A and communication device MGC_A of an anonymous call request in the form of a message, data packet or data string, to communication device MGC_B, the message, data packet or data string including at least one characteriser CARi_A of entity A,
   - at the decision of entity B, transmission by call control application ACC_B and call management device MGC_B of a message, data packet or data string accepting or refusing the call to call management device MGC_A,
   - if the call is accepted, set up of a double anonymity call between entities A and B in the voice mode, text mode or data mode via communication devices MC_A and MC_B and initiated by call control application ACC_A.

An important characteristic of the invention is the confidential or restricted access utilisation by entities A and B of the possibility for direct communication between call control devices MCG_A and MGC_B of terminals A and B, for setting up an initial exchange between MCG_A and MGC_B (terminals A and B remain under the total control of MCG_A and MCG_B, only transmitting messages as is with no possibility for user intervention on the terminals), and eventual initiation of a main call between A and B without either having access to the telephone number of the other party.

Another important characteristic of the invention lies in the utilisation of nicknames and characterisers for each entity or person, so as to ensure a minimum level of interest in communication with the other party for A and B. Characterisers are defined by class, for example profession, age, areas of interest, languages spoken, call windows authorised by the user, etc., and their content, informed with data obtained from the persons or entities concerned. These nicknames and characterisers are grouped with the corresponding call numbers (kept secret for the users) in a data base, all or part of which is loaded in the form of a list in the terminal of the caller, or in fact of any potential user of the anonymous call set up protocol according to the invention.

Another important characteristic of the invention lies in the utilisation of the same software application (or at least applications which are compatible with each other) by the communication devices of A and B, and specifically adapted to use the protocol according to the invention.

According to a first variant for application of the procedure according to the invention, in that the reciprocal information of A concerning B and B concerning A largely covers the same classes of characterisers, in order to ensure an identical or very similar level of information between A and B for reasons of equity.

According to a second application variant of the procedure according to the invention, all eventual traces of the call between entity A and entity B are eliminated in communication devices MC_A and MC_B and/or in call management devices MGC_A and MG_B.

According to a third application variant of the procedure according to the invention, the call set up operation is only performed in the time interval (date/time) defined by the authorised call window pre-established by entity B. In all cases the invention provides for entity B to be able to call back entity A where appropriate, but in all cases anonymously.

According to an extremely interesting method of applying the invention, messages, data packets or data strings are transmitted via an **SMS** type communication channel using short messages, or via a **USSD (Unstructured Supplementary Service Data**) type communication channel. This makes it possible to use pre-existing services, and simplify application of the protocol according to the invention.

According to an extremely interesting method of using the invention, the procedure according to the invention is applied to mobile telephony, in particular to the **GSM, GPRS** and **UMTS (Universal Mobile Telecommunications System**) networks, said communication devices MC_A and MC_B comprising mobile telephony telecommunication terminals **ME**, adapted for connection to the corresponding network, with call control applications provided by **SIM** card or similar equipment applications, for example **applets**, call devices MC_A and MC_B, namely mobile phones **ME**_A and **ME**_B, and/or call management devices MGC_A and MGC_B, namely cards **SIM**_A and **SIM**_B, for which identification IMC A and IMC_B are the respective telephone numbers of the mobile terminals **ME**.

The procedure according to the invention is used advantageously with mobile telephony terminals **ME** on the **GSM** network, using **SIM Application Toolkit** type **SIM** cards with proactive commands, and an **applet** type call control application, in particular with the following protocol according to the invention adapted for the **SIM Application Toolkit:**
- selection by entity A using the "**select item**" command of identifier P_Bp from list of identifiers P_B,
- display on the screen of the entity A terminal, using the **"display text"** proactive command, of characterisers CARi_B of P_B, and review of characterisers CARi_B of P_B by entity A,
- Repetition of the two preceding operations where appropriate, with change of identifier P_B each time until confirmation by entity A of a request for connection with entity B is obtained,
- Transmission by call management device MGC_A via communication devices MC_A and MC_B, under the control of call control application ACC_A of entity A, of a call request message, in particular using the "**send short message-data mode**" proactive command, data package or data string, to the call control application of entity B, said message, data package or data string including at least identifier P_A and characterisers CARi_A of entity A,
- Display on the screen of the terminal of entity B, using the **"display text**" proactive command, and review of characterisers CARi_A of P_A by entity B,
- Entry in application ACC_B by entity B using the "**get inkey"** or "**get input**" proactive command of an acceptance YES or refusal NO reply,
- Transmission by call management device MGC_B via communication devices MC_B and MC_A under the control of call control application ACC_B of entity B, of a message, in particular using the **"send short message-data mode**" proactive command, data packet or data string containing the reply YES or NO to the call control application of entity A,
- If the reply is NO, display using the **"display text**" proactive command, of the call refusal for entity A and end of protocol,
- If the reply is YES, set up using identifier IMC_B, in this case the telephone number of entity B, of the call, in particular a telephone conversation, between entity A and entity B via communication devices MC_A and MC_B under the control of application ACC_A, using the **"set up call**" proactive command in an anonymous configuration with no display of the call number of A on the screen of B, application ACC_A immediately erasing, where this exists, any trace of the call number of A in the standard file of the **SIM** card **(EF_LND)** of application ACC_A.

As an advantageous optional variant of the protocol according to the invention adapted for the **SIM Application Toolkit,** application ACC_A and ACC_B can check that the call set up procedure is clearly situated in the time interval (date/time) defined by the authorised call window pre-established by entity B. Applications ACC_A and ACC_B both request the time from their corresponding mobile terminals using the "**provide local information"** proactive command. This double verification is designed to eliminate untimely calls resulting from a possible time shift between terminals A and B.

According to another, extremely interesting application of the invention, the procedure according to the invention applied to communication networks, in particular of the Internet IP or X25 network type, in which the communication devices and/or call control devices used have permanent addresses for their identification, for example machine addresses or addresses according to the **Internet IP v6** protocol. It is thus possible to use the invention for anonymous, high-rate data transfer.

The invention also concerns network communication terminals and telecommunication or mobile phone terminals, in particular of the **GSM, GPRS** or **UMTS** type, equipped with proactive **SIM** cards or compatible or similar equipment, in both cases including the means to implement the procedure according to the invention presented above, according to all operating methods and variants.

Other purposes, advantages and characteristics of the invention will become evident from perusal of the following description of the preferential method of achieving the procedure for call set up according to the invention, given for non-restrictive example purposes in a **GSM** environment referring to the appended diagram, where:

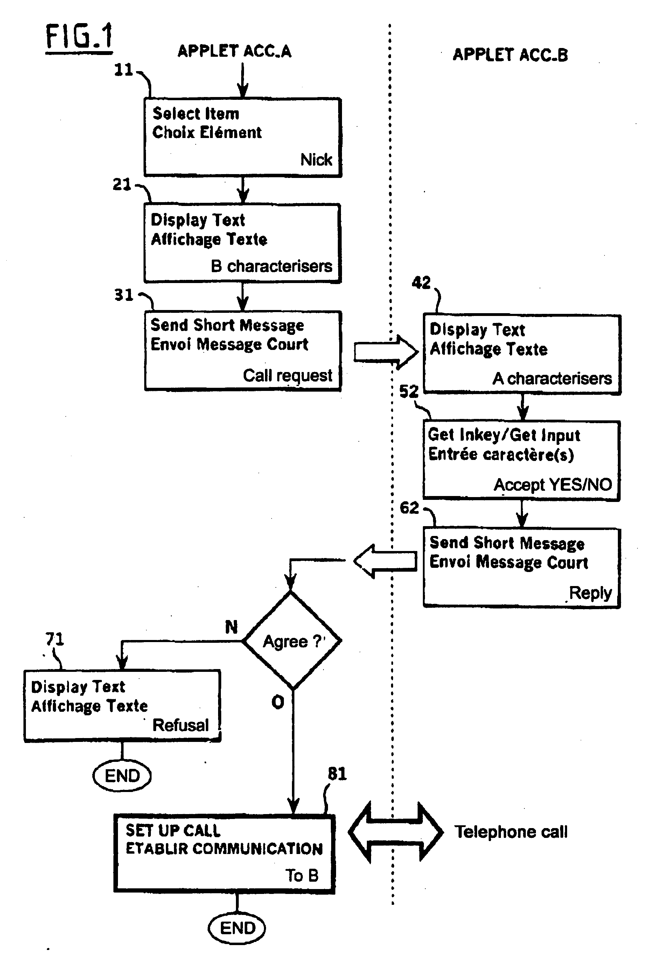

- Figure 1 shows a communication flowchart illustrating implementation of the call connection protocol used in the procedure according to the invention in a **GSM** environment.

It should first be noted that it can be of assistance when reading this document to refer to various **ETSI** (**European Telecommunications Standards Institute)** publications, in particular those concerning **GSM** recommendations, including recommendations **GSM 11.14** [in particular version V8.2.0 (2000-04)], **GSM 03 40** and **GSM 03 48** [in particular version V8.3.0 (2000-8)] concerning proactive **SIM** cards **(SIM Application Toolkit)** and **SMS** messages, and **ISO** standards concerning smart cards, and standard **ISO** 7816-3 in particular.

In a **GSM** environment, communication devices MC_A and MC_B comprise two **ME** mobile terminals of any known type, suitable for connection to the **GSM** network via corresponding network servers. Each **ME** terminal is equipped with an **SIM** microprocessor card, the latter being assigned a network subscriber identifier **(IMSI),** corresponding to the telephone number or call number of the subscriber.

Generally the **SIM** card communicates and exchanges data with its host terminal, the mobile phone, using protocol T=0 defined in standard **ISO** 7816-3 of the International Standards Organisation, according to which dialogues are set up in all cases at the initiative of the terminal, the latter sending commands inducing responses by the **SIX** card. These commands have a specific **APDU (Application Protocol Data Unit)** format, and also provide for data transfer. However, with a standard **SIM** card, set up of a telephone call remains in the domain of the **ME** mobile terminal and under the direct control of the user, caller A. This results in an absence of confidentiality and anonymity between caller A and called party B, in particular as regards telephone numbers.

In addition to the standard **SIM** card, advanced **SIM** cards incorporating microprocessors also exist, referred to as proactive and capable of initiating actions on the terminal by means of the appropriate proactive commands. The majority of these proactive commands are defined in specification **GSM 11.14** compatible with **ISO** 7816-3 (this includes **"GSM** 11.14/class" to **"GSM** 11.14/class" variants). All these **GSM** 11.14 proactive commands are grouped under the denomination **"SIM Application Toolkit".** As a variant, the **SIM** card also has **GPRS (General Packet Radio Service**) compatibility, providing for execution of **GPRS** high-rate data transfer sessions.

Compared with a standard **SIM** card, the **SIM Application Toolkit** cards incorporate new functions, certain of which, associated with special proactive commands, are in widespread use in connection with this invention. In particular, the **SIM Application Toolkit** proactive card, associated with an EEPROM, is capable of the following:
- managing incoming and outgoing calls on the mobile terminal, and in particular initiating transparent telephone calls via the **ME** mobile terminal, without any particular intervention by the terminal which has a simple executive function in this case (confidential mode for caller and called party B),
- incorporating small software programs, also referred to as **applets,** and capable of executing processing operations or implementing special protocols. **SIM applets** are frequently, although not necessarily, programmed in **JAVA. Applets** can be identified by their **TAR (Toolkit Application Reference**), in particular where it is wished to personalise a call to a given **applet.** By default, the proactive **SIM** card manages distribution of incoming messages to the **applet(s)** which may be concerned,
- direct, transparent communication with another proactive **SIM** card via mobile terminals (in the **GSM** case, via a data communication channel separate from the local telephone channel), using the **SMS (Short Message Service).** Here again, the short message service is totally transparent with respect to the **ME** mobile terminals in the data mode, thereby maintaining confidentiality in the proactive **SIM** card and/or the **applets** loaded in the card,
- direct downloading of data (software and/or data in the strictest sense) in **SIM** card memory.

These capabilities are used in connection with the invention to implement an anonymous call connection protocol as defined below referring to Figure 1, which undergoes software translation to call control **applet** ACC form. Naturally, **applet** ACC is designed in a reciprocal manner to enable each user (A and B) to be either caller or called party, with the possibility of personalising each **applet** ACC, in particular as presented below. Nevertheless, while remaining within the framework of the invention, the notion of a separate transmission **applet** ACCE and reception **applet** ACCR is also possible as a variant.

Thus utilisation in connection with the invention of two **SIM Application Toolkit** cards, each containing an **applet** ACC (ACC_A and ACC_B) in its memory, with the mobile terminals of parties A and B, makes it possible, in a **GSM** environment, to use a second communication channel (**SMS** channel) confidentially or with restricted access for entities A and B, to execute an initial exchange between the **SIM** cards of the terminals of A and B, and where appropriate and after agreement, to set up a main call between A and B without access for either party to the telephone number of the other party, thus meeting the double anonymity objective.

The call set up protocol described below, and the main characteristics of the corresponding **applet** ACC are given for non-limitative example purposes, bearing in mind that the protocol can be the subject of more or less equivalent alternative variants and/or optional modifications. However, every attempt has been made to use known proactive commands where possible, so as to avoid making programming more cumbersome, save memory space and reduce execution time. Furthermore, commands, data transmitted and calls can be encrypted, or subject to other security measures, through application of the recommendations of **GSM 03.48** as necessary by the developer-programmer of the **applet** ACC. However, to simplify the description, the encryption and authentication procedures which can be used with this invention conform with known procedures in this domain for **GSM** applications, and **SIM Application Toolkit applets** in particular, and are consequently not presented in detail below.

Before presenting the call set up protocol according to the invention, and the main functions and commands of the **applet** ACC, referring to the flowchart shown in Figure 1, it is important to define the memory list of potential called parties available for caller user A.

A nickname and characteriser (e.g. profession, age, areas of interest, languages spoken, etc.) directory for each entity or individual is used for this purpose, to ensure a minimum level of interest in mutual communication for A and B. It will be noted that the term nickname is taken in its widest sense and can be a name or a sequence of alphanumeric characters, in particular where entities A and B are not individuals, for example legal entities or call or automatic reception centres for anonymous opinion polls, audience measurement (audimat), etc. Nicknames P_A, P_B, P_Bp and characterisers CARi_A, CARi_B and CARi_Bp are grouped with the corresponding call numbers in a database or group list, all or part of which is loaded in list form in the terminal of the caller (downloaded in **SIM Application Toolkit** card memory of A), or in fact of any potential user (A, B, etc.) of the anonymous call set up protocol according to the invention. To sum up, any potential caller included in the group list has at least part of this list in its **applet** ACC, bearing in mind that the call numbers available to **applet** ACC_A remain secret for caller A in all cases.

According to the nicknames and characterisers used, it is also possible to characterise each **applet** ACC of the group members, informing the corresponding fields of the classes characterising the **applet** from the same information contained in the group list. The following is a non-limitative example for ACC_A:
- CAR1_A = nickname identifier: Monte-Cristo
- CAR2_A = profession: seaman
- CAR3_A = acre: 30
- CAR4_A = areas of interest: adventure
- CAR5_A = languages spoken: French, Spanish and Italian and as an option:
- CAR6_A = authorised call window fdate(s) or day(s) /time (s)]: Saturday between 9 a.m. and 12 noon.

As for any operating mode, the protocol according to the invention includes a number of logic mechanisms and rules, frequently translated into software form, designed for global and unitary implementation of the physical components of the system, including management of interfaces between the various physical components. Specifically, the protocol according to the invention is designed for communication and exchange of data between two **SIM Application Toolkit** proactive smart cards in the double anonymity mode.

In practice, the protocol can be summarised in general schematic terms as follows:

The application enables caller A to display data concerning nicknames loaded in its mobile terminal on the screen (excepting telephone numbers). Caller A can select the nickname of person B to set up a direct telephone call with said person B. Generally (although this is not essential), to ensure equity between A and B as regards information concerning the other party before setting up a telephone call, the application of party A sends information describing party A to the application of party B. The application of B advises its holder, enabling party B to display information received from A, A and B then having the same level of information. On the basis of this information, B decides to accept or refuse the call via the application of B. If the call is accepted, the application of A is advised by the application of B, and sets up the telephone call.

According to its implementation in a **GSM** environment, and as presented in the flowchart shown in Figure 1, the anonymous call set up protocol according to the invention, and on which **applet** ACC (ACC_A and ACC_B) is structured, is defined as the following sequence of operations presented according to the **applet** responsible for executing a given operation (ACC_A or ACC_B):
- Operation 11 (**applet** ACC_A): Selection by entity A, using the **"select item"** proactive command, of an identifier P_B from list of identifiers P_Bp;
- Operation 21 (**applet** ACC_A): Display on the screen of the terminal of A, using the **"display text**" proactive command, of characterisers CARi_B of P_B;
- Review of characterisers CARi_B of P_B by entity A;
- Repetition of the two preceding operations, where appropriate, with a change of identifier P_B each time until a final selection of called party B is made, and confirmation of a request for a call to entity B by entity A,
- operation 31 (**applet** ACC_A): Transmission of a call request message using the "**send short message-data mode"** proactive command to **applet** ACC_B, said message including at least identifier P_A and characterisers CARi_A of entity A, and the call number of A (and as an option, data relating to the call window of B [date/day and limit times]),
- Operation 42 (**applet** ACC_B): Display on the screen of the terminal of B using the **"display text**" proactive command,
- Review of characterisers CARi_A of P_A by entity B,
- operation 52 (**applet** ACC_B): Entry in application ACC_B by entity B using the "**get inkey**" or "**get input**" proactive command of an acceptance YES or refusal NO reply,
- Operation 62 (**applet** ACC_B): Transmission of a reply message to applet ACC_A using the "**send short message-data mode**" proactive command, the message containing a YES or NO reply,
- Operation 71 (**applet** ACC_A): If the reply is NO, display using the "**display text**" proactive command of the call refusal for entity A, and end of protocol,
- Operation 81 (**applet** ACC_A): If the reply is YES, set up of a telephone call between entity A and entity B using the "**set up call**" proactive command.

The following notes concern certain of the operations listed above.

### Notes on operation 31:

The short message is sent in the "data mode" and not in the "text mode", to avoid display of the call number of A on the mobile terminal of B (short messages in "text mode" are received by the mobile terminal and not by the **applet**). Conversely according to **GSM** procedures, the "data mode" short message is sent from the **applet** as such by the mobile terminal.

The "data mode" short message is formatted to standard **GSM** 03.40 and 03.48, and comprises a number of headers and a "data part". In the headers, **applet** ACC_A specifies the call number of called party B, and where appropriate, the **TAR** reference of the called party **applet** ACC_B of the message, and optionally, the validity period for the message, for example 5 minutes (if B is not contacted within 5 minutes, the network operator cancels the message which is then not sent to B). Short message data contain the nickname, characterisers and call number of A (to enable application ACC_B to call back to A where appropriate).

It will be noted that it is possible to use encryption and authentication procedures between **applets** ACC_A and ACC_B for a very high level of confidentiality.

If the "call window" option has been selected, the **applet** of A requests the time from its mobile terminal **ME_**A using the "**provide local information"** proactive command, and checks that the time is inside the authorised call window given by B before initiating operations 31 and 81. In the negative case, the **applet** of A displays a "nickname not available" warning message on the screen of A and cancels the operation.

### Notes on operation 42:

The short message sent by A is received by the mobile terminal of B, which sends the message directly to **applet** ACC_B.

According to **GSM** procedures, the mobile terminal of B is not rung on reception of the message as this message is formatted. However, **applet** ACC_B sends a **"Play Tone"** proactive command to indicate to B that a caller wishes to set up a call.

**Applet** ACC_B stores the characterisers, nickname and call number of A in a historical list, before displaying the characterisers of A using the **"display text**" command.

If the "call window" option has been selected, and if the **applet** of A has sent the data relating to the call window of B [date/day and limit times], the **applet** of B requests the time from its mobile terminal, and checks with the time of mobile terminal **ME_B** that the window given by B is complied with. If this is so, the **applet** of B initiates operations 42, 52 and 62. In the negative case, B can callt A later.

### Notes on operation 52:

**Applet** ACC_B uses the "**get inkey**" (character Y for YES or N for NO) or the "**get input**" proactive command to request B to reply urgently by YES or NO.

### Notes on operation 81:

**Applet** ACC_A sends the "**set up call**" proactive command to request the mobile terminal of A to set up a call with the mobile terminal of B. At the same time **applet** ACC_A advises A on the mobile terminal screen of A that B has accepted, and that the telephone call is in process.

**Applet** ACC_A configures the "**set up call**" command so that the call number of A is not presented on the mobile terminal of B, either by placing the appropriate parameter in field CCP of this command, or prefixing the call number of B by the sequence **#31#.**

**Applet** ACC_A also erases all traces of the call in the standard **SIM(EF_LND)** file if the last call was stored.

Naturally, the communication protocol according to the invention is not limited to the application described above for a **GSM** environment. Apart from telephone calls, the call set-up protocol can be used within the context of the invention for data transmission, enabling users to send text, images, sound, video or merely data files. Short message communication can also be replaced by other communication protocols such as **USSD.**

The procedure according to the invention is also applicable for mobile communication technologies other than **GSM,** including **GPRS** and **UMTS** in particular, and Internet or X25 network communication technologies insofar as permanent addresses are used as call numbers.

To conclude, it will be noted from the preceding description that, for implementation of the invention in the **GSM** mode, **SMS** messages are sent on a communication channel separate from the main communication channel, in this case a telephone line. This characteristic is not essential for the invention, which can also be implemented using the same communication channel (as in the case of certain networks), insofar as call management devices MGC_A and MGC_B can communicate directly with each other, even via communication devices MC_A and MC_B where appropriate, under conditions of confidentiality for users A and B.

## Claims

1. Procedure for setting up a direct, anonymous call between two entities, caller A and called party B, each entity being equipped with communication devices MC_A and MC_B with permanent identification IMC_A and IMC_B, **characterised by** the fact that after a request for a call by caller A (31), call management devices MGC_A and MGC_B of communication devices MC_A and MC_B communicate directly with each other under conditions of confidentiality for caller A and called party B through a confidential or restricted access communication channel for the caller and called party entities for setting up an initial exchange between MGC_A and MGC_B (31, 62), and set up a double anonymity call (81) if the call is accepted by entity B.

2. Procedure according to claim 1, in that call management device MGC_A of communication device MC_A enable entity A to display characterisers of potential called party entities (21), to enable caller entity A to select a called entity B to set up a call with the latter.

3. Procedure according to claim 1, in that said procedure uses a stored potential called party list associated with call management device MGC_A, with for each called party, identifier P_Bp and corresponding identification IMC_Bp, identification IMC_Bp not being accessible to the entities.

4. Procedure according to claim 1, in that, before setting up the call, call management device MGC_A transmits an anonymous call request (31) to communication device MC_B of called entity B, including at least one characteriser CARi_A of caller entity A.

5. Procedure according to claim 1, in that call management device MGC_B enables entity B to display characteriser(s) CARi_A transmitted by entity A (42), and on decision by entity B, to transmit a call acceptance or refusal message to call management device MGC_A of caller entity A.

6. Procedure according to claim 1, in that eventual traces of calls between entity A and entity B in communication devices MC_A and MC_B and/or call management devices MGC_A and MGC_B are eliminated.

7. Procedure according to claim 1, in that the call set-up operation is only executed inside the time interval defined by an authorised call window pre-established by entity B.

8. Procedure according to claim 1, in that it is applied to mobile telephony, said communication devices MC_A and MC_B comprising mobile telephony telecommunication terminals ME, adapted for connection to the corresponding network, said call management devices MGC_A and MGC_B comprising cards SIM_A and SIM_B and said confidential or restricted access communication channel for the caller and called party entities for setting up an initial exchange being of the SMS type with short or USSD type messages.

9. Communication device MC with permanent entity identification IMC, **characterised by** the fact that it incorporates call management device MGC, comprising call control application ACC, a memory associated with call management device MGC, containing a list of potential called party entities, with identifier P_Bp for each called party, corresponding identification IMC_Bp for the communication device associated with entity Bp not being accessible to the entities, call management devices MGC_A and MGC_B of said communication device MC_A and MC_B being configured, when a call is set up between entities A and B, to communicate directly with each other under conditions of confidentiality for caller A an called party B through a communication channel which is confidential for the caller and called party entities, to execute an initial exchange, and if the call is accepted by called entity B, to set up a direct, double anonymity call.

10. Communication device according to claim 9, in that said device is a network communication terminal.

11. Communication device according to claim 9, in that said device comprises a telecommunication terminal, or a mobile phone terminal.

12. Communication device according to any one of claims 9 to 12, in that it comprises means for storing characteriser(s) CARi_Bp for each called party.

13. SIM proactive command card, **characterised by** the fact that it incorporates an applet type call control application, a memory containing a list of potential called party entities with identifier P_Bp for each called party, identification IMC_Bp of the corresponding SIM card not being accessible to the entities, so that when a call is set up between two entities A and B, when the card is installed in a terminal associated with an entity, the card is adapted to use an SMS type communication channel with short or USSD type messages in the confidential mode for the caller and called party entities, in order to execute an initial direct exchange with another card in another terminal, and in the event of acceptance of the call by the called entity, set up a direct, double anonymity call.

## Patentansprüche

1. Verfahren für die Einrichtung eines direkten, anonymen Anrufs zwischen zwei Einheiten, Anrufer A und der angerufenen Partei B, bei der jede Einheit mit den Kommunikationsgeräten MC_A und MC_B mit der permanenten Identifikation IMC_A und IMC_B ausgestattet wird, und die durch die Tatsache charakterisiert wird, dass nach einer Anforderung eines Anrufs durch Anrufer A (31) die Anrufverwaltungsgeräte MGC_A und MGC_B der Kommunikationsgeräte MC_A und MC_B direkt miteinander kommunizieren, unter strengster Geheimhaltung der Daten des Anrufers A und der angerufenen Partei B durch einen geheimen Kommunikationskanal oder einen Kommunikationskanal mit beschränktem Zugang für den Anrufer und die angerufene Partei für die Einrichtung eines ersten Austauschs zwischen MGC_A und MGC_B (31, 62) sowie die Einrichtung eines Anrufs mit doppelter Anonymität (81), wenn der Anruf durch die Einheit B angenommen wird.

2. Verfahren gemäß Patentanspruch 1, laut dem das Anrufverwaltungsgerät MGC_A des Kommunikationsgeräts MC_A es Einheit A ermöglicht, die Charakterisierungspunkte potenziell angerufener Parteien (21) anzuzeigen, um es der anrufenden Einheit A zu ermöglichen, eine angerufene Einheit B auszuwählen, um mit letzterer einen Anruf einzurichten.

3. Verfahren gemäß Patentanspruch 1, laut dem die besagte Verfahren eine gespeicherte Liste der potenziell angerufenen Parteien speichert, die mit dem Anrufverwaltungsgerät MGC_A verbunden ist und für die Identifikator P_Bp und die entsprechende Identifikation IMC_Bp für jede angerufene Partei, wobei die Einheiten nicht auf die Identifikation IMC_Bp zugreifen können.

4. Verfahren gemäß Patentanspruch 1, laut dem vor Einrichtung des Anrufs das Anrufverwaltungsgerät MGC_A eine anonyme Anrufanforderung (31) an das Kommunikationsgerät MC_B der angerufenen Einheit B überträgt, einschließlich mindestens eines Charakterisierungspunktes CARi_A der anrufenden Einheit A.

5. Verfahren gemäß Patentanspruch 1, laut dem das Anrufverwaltungsgerät MGC_B es der Einheit B ermöglicht, den/die Charakterisierungspunkt(e) CARi_A, welche von Einheit A übertragen werden, anzuzeigen, und, gemäß der Entscheidung der Einheit B, die Nachricht über die Anrufannahme oder eine Ablehnung des Anrufs an das Anrufverwaltungsgerät MGC_A der anrufenden Einheit A überträgt.

6. Verfahren gemäß Patentanspruch 1, laut dem etwaige Spuren von Anrufen zwischen Einheit A und Einheit B auf den Kommunikationsgeräten MC_A und MC_B bzw. den Anrufverwaltungsgeräten MGC_A und MGC_B gelöscht werden.

7. Verfahren gemäß Patentanspruch 1, laut dem die Einrichtung des Anrufs nur in einem von Einheit B vorher eingerichteten, genehmigten Anruffenster festgelegten Zeitintervall ausgeführt wird.

8. Verfahren gemäß Patentanspruch 1, laut dem bei Anwendung in Bezug auf die Mobiltelefonie die besagten Kommunikationsgeräte MC_A und MC_B, die die Mobiltelefonie-Terminals ME darstellen, die für eine Verbindung mit dem entsprechenden Netzwerk geeignet sind; die besagten Anrufverwaltungsgeräte MC_A und MC_B, die die SIM-Karten SIM_A und SIM_B umfassen, sowie der besagte geheime oder beschränkte Zugriff auf Kommunikationskanäle für den Anrufenden und die angerufene Partei für die Einrichtung eines ersten Austauschs in Form von SMS mit Kurz- oder USSD-Nachrichten.

9. Das Kommunikationsgerät MC mit der permanenten Einheitsidentifikation IMC, charakterisiert durch die Tatsache, dass es mit dem Anrufverwaltungsgerät MGC ausgestattet ist, das wiederum mit der Anrufkontrollapplikation ACC ausgestattet ist, ein Datenspeicher in Verbindung mit dem Anrufverwaltungsgerät MGC, das eine Liste der potenziell angerufenen Parteien enthält, mit dem Identifikator P_Bp für jede angerufene Partei, der entsprechenden Identifikation IMC_Bp für das Kommunikationsgerät, das mit der Einheit Bp, auf die die Einheiten nicht zugreifen können, verbunden ist, den Anrufverwaltungsgeräten MGC_A und MGC_B der besagten Kommunikationsgeräte MC_A und MC_B, die konfiguriert werden, wenn ein Anruf zwischen den Einheiten A und B eingerichtet wird, damit diese direkt miteinander kommunizieren können, und dies bei strenger Geheimhaltung für den Anrufer A und die angerufene Partei B, durch einen Kommunikationskanal, der für den Anrufer und die angerufene Partei streng geheim ist, für die Durchführung eines ersten Austauschs und, wenn der Anruf von der angerufenen Einheit B angenommen wird, für die Einrichtung eines direkten Anrufs mit doppelter Anonymität.

10. Kommunikationsgerät gemäß Patentanspruch 9, laut dem das besagte Gerät ein Netzwerkkommunikationsterminal darstellt.

11. Kommunikationsgerät gemäß Patentanspruch 9, laut dem das besagte Gerät ein Telekommunikationsterminal oder ein Mobiltelefonterminal darstellt.

12. Kommunikationsgerät gemäß der Patentansprüche 9 - 12, laut denen es Methoden für die Speicherung des/der Charakterisierungspunktes/e CARi_Bp für jede angerufene Partei umfasst.

13. Die Karte dahingehend angepasst ist, dass sie einen SMS-artigen Kommunikationskanal mit Kurz- oder USSD-artigen Nachrichten im Geheimhaltungsmodus für den Anrufer und die angerufene Partei enthält, um einen ersten direkten Austausch mit einer anderen Karte in einem anderen Terminal vorzunehmen, und im Falle einer Annahme des Anrufs durch die angerufene Partei ein direkter Anruf mit doppelter Anonymität eingerichtet wird.

## Revendications

1. Procédé d'établissement d'un appel direct, anonyme, entre deux entités, Appelant A et Appelé B, chaque entité étant équipée d'appareils de communication MC_A et MC_B avec identification permanente IMC_A et IMC_B, **caractérisée en ce que** après une demande d'appel par l'Appelant A (31), des appareils de gestion d'appel MGC_A et MGC_B des appareils de communication MC_A et MC_B communiquent directement l'un avec l'autre sous des conditions de confidentialité pour l'Appelant A et l'Appelé B à travers un canal de communication à accès confidentiel ou restreint pour les entités d'Appelant et d'Appelé en vue de l'établissement d'un échange initial entre MGC_A et MGC_B (31, 62), et pour l'établissement d'un appel à double anonymat (81) si l'appel est accepté par l'entité B.

2. Procédé conformément à la revendication 1, **caractérisée en ce que** l'appareil de gestion d'appel MGC_A de l'appareil de communication MC_A permet à l'entité A d'afficher des caractériseurs d'entités d'Appelés potentiels (21), afin de permettre à l'entité d'Appelant A de sélectionner une entité d'Appelé B pour établir un appel avec cette dernière.

3. Procédé conformément à la revendication 1, **caractérisée en ce que** ladite Procédé utilise une liste enregistrée d'Appelés potentiels, associée à l'appareil de gestion d'appel MGC_A, avec pour chaque Appelé, l'identifiant P_Bp et l'identification correspondante IMC_Bp, sachant que l'identification IMC_Bp n'est pas accessible aux entités.

4. Procédé conformément à la revendication 1, **caractérisée en ce que**, avant l'établissement de l'appel, l'appareil de gestion d'appel MGC_A transmet une demande d'appel anonyme (31) à l'appareil de communication MC_B de l'entité d'Appelé B, avec au moins un caractériseur CARi_A de l'entité d'Appelant A.

5. Procédé conformément à la revendication 1, **caractérisée en ce que** l'appareil de gestion d'appel MGC_B permet à l'entité B d'afficher le ou les caractériseur(s) CARi_A transmis par l'entité A (42) et, sur décision de l'entité B, de transmettre une acceptation d'appel ou un message de refus à l'appareil de gestion d'appel MGC_A de l'entité d'Appelant A.

6. Procédé conformément à la revendication 1, **caractérisée en ce que** d'éventuelles traces d'appels entre l'entité A et l'entité B sur les appareils de communication MC_A et MC_B et/ou sur les appareils de gestion d'appel MGC_A et MGC_B sont supprimées.

7. Procédé conformément à la revendication 1, **caractérisée en ce que** l'opération d'établissement d'appel est uniquement exécutée durant l'intervalle de temps défini par une fenêtre d'appel autorisée pré-établie par l'entité B.

8. Procédé conformément à la revendication 1, **caractérisée en ce qu'**elle est appliquée à la téléphonie mobile, sachant que lesdits appareils de communication MC_A et MC_B comprennent des terminaux de télécommunication de téléphonie mobile ME adaptés à une connexion sur le réseau correspondant, sachant que lesdits appareils de gestion d'appel MGC_A et MGC_B comprennent les cartes SIM_A et SIM_B et sachant que ledit canal de communication à accès confidentiel ou restreint, servant à ce que les entités d'Appelant et d'Appelé établissent un échange initial, est de type SMS avec des messages courts ou de type USSD.

9. Appareil de communication MC avec identification d'entité permanente IMC, **caractérisé en ce qu'**il intègre un appareil de gestion d'appel MGC, sachant qu'il comprend une application de contrôle d'appel ACC, une mémoire associée à l'appareil de gestion d'appel MGC contenant une liste d'entités d'Appelés potentiels avec l'identifiant P_Bp pour chaque Appelé, sachant que l'identification correspondante IMC_Bp pour l'appareil de communication associé à l'entité Bp n'est pas accessible aux entités, sachant que les appareils de gestion d'appel MGC_A et MGC_B desdits appareils de communication MC_A et MC_B sont configurés, lorsqu'un appel est établi entre les entités A et B, pour communiquer directement l'un avec l'autre sous des conditions de confidentialité pour l'Appelant A et l'Appelé B à travers un canal de communication confidentiel pour les entités d'Appelant et d'Appelé, afin d'exécuter un échange initial et, si l'appel est accepté par l'Appelé B, pour établir un appel direct, à double anonymat.

10. Appareil de communication conformément à la revendication 9, **caractérisé en ce que** ledit appareil est un terminal de communication de réseau.

11. Appareil de communication conformément à la revendication 9, **caractérisé en ce que** ledit appareil comprend un terminal de communication ou un terminal de téléphone mobile.

12. Appareil de communication conformément à l'une des revendications 9 à 12, **caractérisé en ce qu'**il comprend un moyen d'enregistrement de caractériseur(s) CARi_Bp pour chaque Appelé.

13. Carte de commande proactive SIM **caractérisée en ce qu'**elle intègre une application de contrôle d'appel de type applet, une mémoire contenant une liste d'entités d'Appelés potentiels avec l'identifiant P_Bp pour chaque Appelé, sachant que l'identification IMC_Bp de la carte SIM correspondante n'est pas accessible aux entités, de sorte que, lorsqu'un appel est établi entre deux entités A et B lorsque la carte est installée dans un terminal associé à une entité, la carte est adaptée à l'utilisation d'un canal de communication de type SMS avec messages courts ou de type USSD en mode confidentiel pour les entités d'Appelant et d'Appelé, afin d'exécuter un échange initial direct avec une autre carte dans un autre terminal et, en cas d'acceptation de l'appel par l'entité d'Appelé, pour l'établissement d'un appel direct à double anonymat.
